Europäisches Patentamt

(19) European Patent Office

Office européen des brevets

(11) Numéro de publication : **0 309 371 B1**

(12) FASCICULE DE BREVET EUROPEEN

(45) Date de publication du fascicule du brevet :
27.12.91 Bulletin 91/52

(51) Int. Cl.⁵ : **B23P 21/00**

(21) Numéro de dépôt : 88440077.1

(22) Date de dépôt : 19.09.88

(54) Machine d'assemblage des différentes pièces d'un élément de ferrure.

(30) Priorité : 21.09.87 FR 8713171

(43) Date de publication de la demande :
29.03.89 Bulletin 89/13

(45) Mention de la délivrance du brevet :
27.12.91 Bulletin 91/52

(84) Etats contractants désignés :
AT BE CH DE ES GB IT LI LU NL SE

(56) Documents cités :
FR-A- 2 589 933
PATENT ABSTRACTS OF JAPAN, vol 6, no.
190(M-159)[1068], 29 septembre 1982, page 25;
JP-A-57/96744 (SANYOU KIKOU K.K.) 16-
06-1982

(73) Titulaire : **FERCO INTERNATIONAL Usine de
Ferrures de Bâtiment Société à responsabilité
limitée**
**2, rue du Vieux-Moulin Reding**
**F-57400 Sarrebourg (FR)**

(72) Inventeur : **Kautt, Jean-Jacques**
**24, rue Pertois**
**F-67000 Strasbourg (FR)**

(74) Mandataire : **Aubertin, François**
**Cabinet Lepage & Aubertin Innovations et
Prestations 4, rue de Haguenau**
**F-67000 Strasbourg (FR)**

## Description

L'invention a trait à une machine d'assemblage des différentes pièces d'un élément de ferrure ladite machine comprenant, pour chaque pièce à assembler, un magasin d'alimentation, un manipulateur, des moyens de préhension et une succession de transporteurs avançant pas-à-pas et présentant le plan longitudinal de l'élément de ferrure perpendiculairement au sens d'avance.

Une machine telle que décrite dans le préambule de la revendication 1 est connue de l'art antérieur, par exemple, par le document FR-A-2589933.

On connaît déjà, par le document FR-A-2589933, une installation d'assemblage des différentes pièces d'un élément de ferrure, tel qu'une crémone d'une ferrure de fenêtre, porte ou analogue, placé par intermittence régulière sur un transporteur avançant pas-à-pas de l'installation, celle-ci comprenant, pour chaque pièce à assembler, au moins un poste d'assemblage disposé selon un plan de référence de l'élément de ferrure. Le transporteur comporte des moyens d'avancement formés d'un convoyeur présentant le plan longitudinal des ensembles de ferrure à assembler perpendiculairement à la ligne d'avancement dudit convoyeur. La largeur de ce dernier est au moins égale à la somme de la plus grande longueur possible de l'élément de ferrure et des longueurs des courses de déplacement latéral de l'élément de ferrure. Quant à la longueur du convoyeur, elle est égale à la largeur d'un poste d'assemblage ou d'un ensemble de postes d'assemblage. Ces moyens d'avancement sont combinés à des moyens de déplacement latéral situés entre deux postes d'assemblage ou deux ensembles de postes d'assemblage. Ils ont pour but de conférer à l'élément de ferrure un parcours bidirectionnel situé dans le plan horizontal dont chaque course est déterminée en fonction du plan de référence de l'élément de ferrure.

On connaît d'autre part un dispositif d'assemblage des différentes pièces d'un élément de ferrure tel qu'un bras de compas.

Un dispositif du type susmentionné est décrit dans la demande de brevet européen EP-A-0282427, qui constitue un document antérieur au sens de l'article 54(3) CBE. Ce dispositif comprend pour chaque pièce à assembler, au moins un poste d'assemblage et un transporteur avançant pas-à-pas pourvu d'au moins un convoyeur. Ce dernier présente l'axe longitudinal du bras de compas perpendiculairement à la ligne d'avancement dudit convoyeur et des moyens de déplacement du bras de compas pour conférer à ce dernier un parcours bidirectionnel. Ce dispositif d'assemblage comporte, en outre, des moyens de positionnement par rapport à des postes d'assemblage et d'usinage selon deux plans repères du bras de compas. L'un de ces plans repères est constitué par le chant de l'axe fileté situé à l'une des extrémités du bras de compas et sur lequel est vissé le pivot assurant la rotation de l'ouvrant de la fenêtre. L'autre plan repère est formé par le centre de l'axe d'articulation du bras secondaire reliant l'ouvrant au dormant de la fenêtre.

Toutefois, du fait que l'on déplace transversalement l'élément de ferrure pas rapport au plan médian de l'installation ou du dispositif d'assemblage, il est nécessaire que le transporteur doit présenter une grande largeur car celle-ci doit au moins être égale à la somme de la plus grande longueur possible de l'élément de ferrure et des longueurs des courses de déplacement bilatéral.

La présente invention a pour but de fournir une machine permettant l'assemblage d'un autre élément de ferrure destiné à coopérer avec le bras de compas solidaire du cadre dormant de la fenêtre oscillo-battante et logé dans une rainure réalisée dans le chant de l'ouvrant de ladite fenêtre oscillo-battante.

Cette machine, conforme à l'invention, permet l'assemblage automatisé d'un élément de ferrure composé, d'une part, d'une tringle de manoeuvre comportant au moins un plot de verrouillage coopérant avec une rampe de verrouillage du bras de compas et au moins un galet de verrouillage coopérant avec une gâche solidaire du dormant de la fenêtre. D'autre part, ledit élément de ferrure est muni d'une têtière comportant un bras auxiliaire reliant cet élément de ferrure au bras de compas, d'un coffre anti-fausse manoeuvre et d'un guide-vis.

Ainsi, il est nécessaire de prévoir un double assemblage, d'une part, celui des éléments accessoires (plot de verrouillage, galet de verrouillage ou bras auxiliaire, coffre-anti-fausse manoeuvre et guide-vis) sur les éléments principaux (tringle de manoeuvre ou têtière) et, d'autre part, l'assemblage de ces derniers.

L'invention, telle qu'elle est caractérisée dans les revendications, résout le problème consistant à créer une machine d'assemblage des différentes pièces d'un élément de ferrure tel qu'un ensemble formé d'une tringle de manoeuvre et d'une têtière et coopérant, par l'intermédiaire d'un bras auxiliaire, avec un bras de compas solidaire du cadre dormant d'une fenêtre oscillo-battante, cette machine comprenant, pour chaque pièce à assembler, un magasin d'alimentation, un manipulateur, des moyens de préhension et une succession de transporteurs avançant pas-à-pas et présentant le plan longitudinal de cet ensemble perpendiculairement au sens d'avance, en outre ladite machine comportant, en combinaison :

— des moyens d'acheminement séparé de la têtière et de la tringle de manoeuvre disposées alternativement par des moyens de transbordement sur un des transporteurs avançant pas-à-pas,

— des moyens d'acheminement superposé de la têtière et de la tringle de manoeuvre,

— des moyens de mise en position d'attente et/ou de mise en position active de la têtière et de la tringle de manoeuvre en positions séparées ou en positions superposées ainsi que des différentes pièces à assembler prélevées par des moyens de préhension dans le magasin de stockage et amenées au droit de ces moyens,

— des moyens de transbordement présentant vers le haut soit la face externe de la têtière, soit la face interne de la tringle de manoeuvre assemblée à la têtière en vue de la fixation par rivetage des différentes pièces à assembler maintenant le plan repère de l'élément de ferrure à une distance constante du plan médian de la machine.

Les avantages obtenus grâce à cette invention consistent essentiellement en ce que l'on procède à l'assemblage automatisé de la têtière et de la tringle de manoeuvre pourvues, chacune, de ses éléments accessoires et, ceci, à l'aide d'une machine dont la largeur est réduite par rapport aux machines connues.

L'invention est exposée ci-après plus en détail à l'aide de dessins représentant seulement un mode d'exécution.

Les figures 1 à 3 représentent l'élément de ferrure réalisé à l'aide de la machine d'assemblage conforme à l'invention, et plus particulièrement :

La figure 1 est une vue arrière de l'élément de ferrure composé essentiellement d'une tringle de manoeuvre et d'une têtière.

La figure 2 est une vue en élévation de cet élément de ferrure.

La figure 3 est une vue avant dudit élément de ferrure.

La figure 4 représente schématiquement une vue en plan de la machine d'assemblage permettant la réalisation de l'élément de ferrure tel que représenté dans les figures 1 à 3.

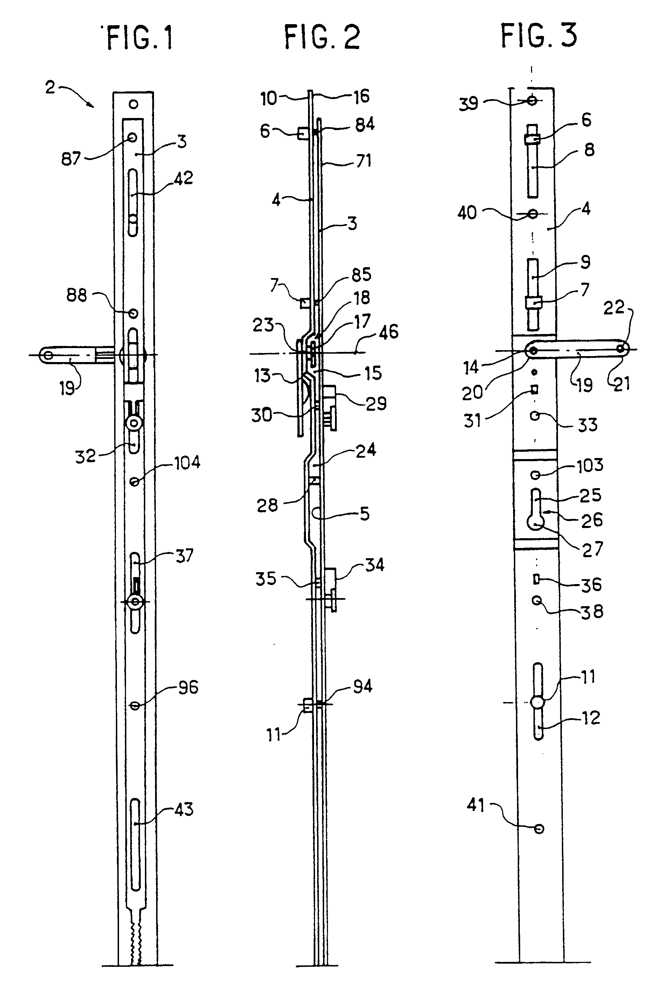

On se réfère aux figures 1 à 3.

La machine d'assemblage 1 est destinée à la fabrication d'un élément de ferrure 2 composé d'une tringle de manoeuvre 3 coulissant dans une rainure réalisée dans le chant de l'ouvrant, notamment d'une fenêtre, et plus particulièrement d'une fenêtre oscillo-battante et d'une têtière 4 recouvrant simultanément la rainure et la tringle de manoeuvre 3.

Cet élément de ferrure 2 doit, d'une part, assurer la fermeture et/ou l'ouverture de la fenêtre oscillo-battante et, d'autre part, coopérer avec un bras de compas solidaire du cadre dormant de ladite fenêtre oscillo-battante.

A cet effet, la face externe 5 de la tringle de manoeuvre 3 comporte au moins un plot de verrouillage 6, 7 traversant une lumière oblongue 8, 9 réalisée dans la têtière 4 et faisant saillie par rapport à la face externe 10 de cette dernière. Le ou les plots de verrouillage 6, 7 sont destinés à coopérer avec une ou des rampes de verrouillage du bras de compas solidaire du cadre dormant. Par ailleurs, la face externe 5 de la tringle de manoeuvre 3 présente au moins un galet de verrouillage 11 traversant également une lumière oblongue 12 de la têtière 4 pour faire saillie par rapport à la face externe 10 de cette dernière en vue de sa coopération avec une gâche solidaire du cadre dormant de la fenêtre oscillo-battante.

La têtière 4 comporte un premier décrochement 13 en relief par rapport à la face externe 10 de la têtière 4, de sorte que l'on obtient un évidement 15 entre la face interne 16 de la têtière 4 et la face externe 5 de la tringle de manoeuvre 3. Cet évidement 15 sert de logement à la tête 17 d'un axe d'articulation 18 permettant la rotation d'un bras auxiliaire 19 servant de liaison entre la têtière 4 de l'ouvrant et le bras de compas solidaire du cadre dormant. L'une des extrémités 20 du bras auxiliaire 19 est rivetée sur l'extrémité 14 de l'axe d'articulation 18 et l'autre extrémité 21 dudit bras auxiliaire 19 comporte un orifice 22 pour le passage ultérieur d'un axe d'articulation assurant la liaison entre le bras auxiliaire 19 et le bras de compas solidaire du cadre dormant. Pour assurer la rotation de l'axe d'articulation 18, ce dernier comporte une rondelle-frein 23 intercalée entre la tête 17 et la face interne 16 de la têtière 4.

Par ailleurs, la têtière 4 comporte un second décrochement 24 également en relief par rapport à la face externe 10. On réalise dans ce second décrochement 24 une lumière oblongue 25 dont une des extrémités 26 présente un élargissement 27 pour le passage de la tête d'un axe d'articulation assurant la liaison entre la têtière 4 et l'extrémité du bras de compas. Pour annihiler un écrasement de ce second décrochement 24, on prévoit une entretoise 28 maintenant l'écartement entre la tringle de manoeuvre 3 et la têtière 4.

On pourvoir la face interne 16 de la têtière 4 d'un coffre anti-fausse manoeuvre 29 pourvu d'un téton 30 riveté dans un orifice 31 réalisé dans la têtière 4. Ce coffre anti-fausse manoeuvre 29, traversant une lumière oblongue 32 pratiquée dans la tringle de manoeuvre 3, comporte un alésage pour le passage d'une vis de fixation traversant un orifice 33 réalisé dans la têtière 4 et assurant la fixation de cette dernière dans la rainure du chant de l'ouvrant.

Par ailleurs, la face interne 16 de la têtière 4 comporte un guide-vis 34 pourvu d'un téton 35 riveté dans un orifice 36 pratiqué dans la têtière 4. Ce guide-vis 34 peut coulisser dans une lumière oblongue 37 faite dans la tringle de manoeuvre 3. Ce guide-vis 34 est traversé par une vis de fixation engagée dans un orifice 38 réalisé dans la têtière 4 pour assurer la fixation de cette dernière.

Comme connu en soi, la têtière 4 comporte une pluralité d'orifices 39, 40, 41 pour des vis de fixation, étant entendu que la tringle de manoeuvre 3 présente au droit de ces orifices 39, 40, 41 des lumières oblongues 42, 43 pour le passage desdites vis de fixation.

Selon l'invention, les différentes pièces énumérées ci-dessus sont assemblées par la machine d'assemblage pour la réalisation de l'élément de ferrure 2 tel que représenté dans les figures 1 à 3.

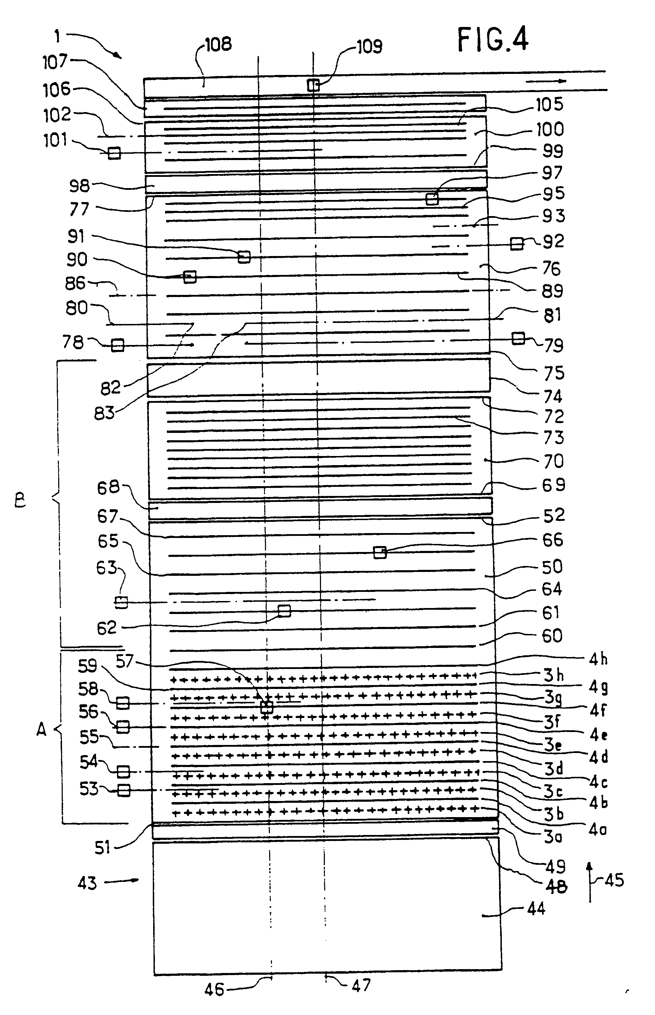

On se réfère à la figure 4.

La machine d'assemblage 1 comporte à son entrée 43 des moyens d'acheminement séparés de la tringle de manoeuvre 3 et de la têtière 4. Ces moyens sont un magasin 44 de stockage des tringles de manoeuvre 3 et des têtières 4 permettant d'alimenter en continu ladite machine d'assemblage 1 en tringles de manoeuvre 3 et en têtières 4. La tringle de manoeuvre 3 comporte toutes les différentes lumières oblongues 32, 37, 42, 43 et la têtière 4 présente les décrochements 13, 24, les lumières oblongues 8, 9, 25, 12 et les différents orifices 31, 33, 36, 38, 39, 40, 41. Ledit magasin 44 se compose de deux transporteurs superposés ayant une course pas-à-pas et dont l'un est destiné à l'acheminement des tringles de manoeuvre 3 et l'autre à l'acheminement des têtières 4. De préférence, on place parallèlement sur le transporteur supérieur les tringles de manoeuvre 3 de sorte que leurs axes longitudinaux juxtaposés soient perpendiculaires au sens d'avance 45 et que la face externe 5 soit dirigée vers le haut. Les têtières 4, disposée parallèlement sur le transporteur inférieur, présentent leurs axes longitudinaux juxtaposés perpendiculairement au sens d'avance 45, la face interne 16 étant dirigée vers le haut. Le transporteur inférieur comporte un guide de centrage venant se loger dans le premier décrochement 13 pour centrer le plan repère 46 de l'élément de ferrure 2 par rapport au plan médian 47 de la machine d'assemblage 1. Selon l'invention, le plan repère 46 est à une distance constante du plan médian 47 depuis l'entrée jusqu'à la sortie de la machine.

On dispose à la sortie 48 de ce magasin 44 des moyens de transbordement 49 permettant de transférer les tringles de manoeuvre 3 et les têtières 4 sur un premier transporteur 50. Ces moyens de transbordement 49 comportent un bras de chargement oscillant prélevant la têtière 4 du transporteur supérieur du magasin 44 pour la disposer, après retournement, sur le premier transporteur 50, de sorte que la face externe 10 soit dirigée vers le haut.

Par ailleurs, les moyens de transbordement 49 comportent un élément de transfert assurant la dépose de la tringle de manoeuvre 3 en aval de la têtière 4 à l'entrée 51, dudit premier transporteur 50. En procédant au retournement de la tringle de manoeuvre 3, on diminue la course de transfert de cette dernière et on réduit l'espace entre le magasin 44 et le premier transporteur 50. Le premier tronçon "A" du premier transporteur 50 constitue un des moyens d'acheminement séparé de la têtière 4 et de la tringle de manoeuvre 3.

Ce premier transporteur 50 est de préférence un transporteur à chaîne comportant au moins deux chaînes parallèles entraînées par des pignons dentés. Sur ces chaînes sont fixés des moyens de mise en position d'attente et/ou de mise en position active des différentes pièces principales, telles que tringles de manoeuvre 3, têtières 4 et des pièces accessoires telles que bras auxiliaire 19, coffre anti-fausse manoeuvre 29, guide-vis 34, plots de verrouillage 6, 7, galets de verrouillage 11 et des rangées de taquets ayant plusieurs fonctions :

— d'une part, ils doivent assurer l'avancement de l'élément de ferrure depuis l'entrée 51 jusqu'à la sortie 52 du premier transporteur 50,

— d'autre part, ils présentent des évidements servant de magasins et dans lesquels viendront se loger, au-fur-et-à-mesure, les différentes pièces à assembler, ces pièces étant mises en position d'attente,

— de plus, ils permettent la mise en position d'attente de la tringle de manoeuvre, respectivement de la têtière et comportent des logements parallèles transversaux

— finalement, ils assurent la mise en position active de la tringle de manoeuvre, respectivement de la têtière. Les taquets supportant les têtières 4 alternent avec les taquets supportant les tringles de manoeuvre 3.

A partir d'un magasin d'alimentation 53, on met en place, à l'aide de moyens de préhension tels qu'un manipulateur, dans l'un des évidements des taquets supportant la têtière 4, l'axe d'articulation 18 dirigé vers le haut, la tête 17 étant logée dans ledit évidement. Après une nouvelle avance pas-à-pas, ces taquets sont présentés devant un magasin d'alimentation 54 contenant les rondelles freins 23. Par des moyens appropriés tels qu'un manipulateur, on enfile sur l'axe d'articulation 18 la rondelle frein 23. Après une nouvelle avance pas-à-pas, les taquets pourvus de la têtière 4 et de l'axe d'articulation 18 muni de sa rondelle frein 23 sont amenés sous des moyens de préhension 55 disposant la têtière 4 sur l'axe d'articulation 18. Puis, ces taquets sont amenés devant un magasin d'alimentation 56 contenant des bras auxiliaires 19. A l'aide d'un manipulateur, un de ces bras auxiliaires 19 est enfilé sur l'axe d'articulation 18 faisant saillie par rapport à la face supérieure 10 de la tringle de manoeuvre 3.

Puis, à l'aide d'une riveteuse 57, on procède au rivetage du bras auxiliaire 19 sur l'axe d'articulation 18 en disposant ce bras auxiliaire 19 perpendiculairement à la têtière 4.

Après rivetage à l'aide d'un autre manipulateur, on prélève d'un magasin d'alimentation 58 un coffre anti-fausse manoeuvre 29 entièrement monté et on dispose celui-ci en position d'attente dans un second évidement des taquets supportant la têtière 4 munie du bras auxiliaire 19 riveté sur l'axe d'articulation 18.

Puis, à l'aide de nouveaux moyens de préhension 59, on dépose la tringle de manoeuvre 3 en aval sur le coffre anti-fausse manoeuvre 29 de sorte que ce dernier fasse saillie à travers la lumière 32. Jusqu'à ce stade, il y avait séparation entre la têtière 4 et la tringle de manoeuvre 3, cette dernière étant disposée en aval de la première. Dans la figure 4, les différentes positions de la tringle de manoeuvre schématisée par une ligne de croix sont définies par les repères 3a, 3b, 3c, 3d, 3e, 3f, 3g, 3h et les différentes positions de la têtière sont schématisées par une ligne continue par les repères 4a, 4b, 4c, 4d, 4e, 4f, 4g, 4h.

Les moyens d'acheminement séparés de la têtière 4 et de la tringle de manoeuvre 3 décrits ci-dessus, sont suivis de moyens d'acheminement superposés de la têtière 4 et de la tringle de manoeuvre 3 constitués à partir des moyens de préhension 60 du tronçon "B" du premier transporteur 50.

Après dépose de la tringle de manoeuvre 3h sur le coffre anti-fausse manoeuvre 29 et graissage de ce dernier, on dispose par des moyens de préhension 60, la têtière 4h sur la tringle de manoeuvre 3h de manière à ce que le téton 30 soit logé dans l'orifice 31 de la têtière 4h. Puis, en 61, on répand sur la têtière 4h, à l'endroit dudit coffre anti-fausse manoeuvre 29, un léger brouillard d'huile de graissage. Après graissage, on procède au rivetage du téton 30 par l'intermédiaire d'une riveteuse 62. Par ce rivetage, on procède à un premier assemblage de la tringle de manoeuvre 3 et de la têtière 4.

Après rivetage, par l'intermédiaire d'un manipulateur, on prélève d'un magasin d'alimentation 63 un guide-vis 34. Toutefois, ce dernier peut être disposé à deux positions différentes. C'est pourquoi, les taquets présentent deux réservations pour la mise en place du guide-vis 34, le positionnement de ce dernier étant défini par la modification de la course d'un vérin du manipulateur provoquée automatiquement par la programmation de la machine.

L'ensemble 64, formé par la têtière 4 posée sur la tringle de manoeuvre 3, est disposé par des moyens de préhension 65 sur le guide-vis 34 en position d'attente et logée dans un des taquets, de sorte que le téton 35 du guide-vis 34 traversant la lumière oblongue 37 de la tringle de manoeuvre 3 s'engage dans l'orifice 36 réalisé dans la têtière 4.

Puis, par l'intermédiaire d'une riveteuse 66, on procède au rivetage du guide-vis 34. Après rivetage, on présente ledit ensemble 64 à un poste de contrôle 67 vérifiant la présence des différentes pièces et notamment la présence de la rondelle frein 23. Au même emplacement, on procède au rabattement du bras auxiliaire 19 dans l'axe longitudinal de l'ensemble 64.

Ce dernier quitte le premier transporteur 50 et il est pris en charge par des moyens de transbordement 68 comportant un bras de chargement oscillant pour disposer ledit ensemble, après un nouveau retournement, à l'entrée 69 d'un second transporteur 70. Suite à ce nouveau retournement, la face interne 71 de la tringle de manoeuvre 3 (voir figure 2) est dirigée vers le haut. Ce second transporteur 70 est également un transporteur à chaîne comportant au moins deux chaînes parallèles entraînées par des pignons moteurs et amenant les ensembles 64 par une avance pas-à-pas depuis l'entrée 69 jusqu' à la sortie 72 dudit transporteur 70. Ce dernier permet de constituer un stock-tampon d'ensembles 64 et comporte un poste de contrôle 73 vérifiant la présence du coffre anti-fausse manoeuvre 29 et du guide-vis 34.

Puis, l'ensemble 64 est transféré horizontalement par des moyens de transbordement 74 à l'entrée 75 d'un troisième transporteur 76, la face interne 71 de la tringle de manoeuvre étant maintenue dirigée vers le haut. Ce troisième transporteur 76 est un transporteur à chaîne comportant au moins deux chaînes parallèles entraînées par des pignons moteurs et pourvues de taquets assurant l'avance pas-à-pas des ensembles 64 depuis l'entrée 75 jusqu'à la sortie 77 du troisième transporteur 76. Pendant ce déplacement, les ensembles 64 sont pourvus d'au moins un plot de verrouillage 6 et d'au moins un galet de verrouillage 11.

A cet effet, le troisième transporteur 76 comporte un ou deux magasins d'alimentation 78, 79 de plots de verrouillage 6, 7. S'il s'agit de deux magasins d'alimentation 78, 79, les magasins d'alimentation sont disposés de part et d'autre du plan médian 47 de la machine. Par des manipulateurs 80, 81, les plots de verrouillage 6, 7 sont mis en position d'attente 82, 83 et sont disposés dans des logements prévus dans les taquets. Toutefois, en fonction du modèle de l'élément de ferrure 2, l'un des deux plots de verrouillage 7 peut être situé à plusieurs distances différentes par rapport à l'autre plot de verrouillage 6. A cet effet, le manipulateur 81 comporte un vérin à course variable, la course étant définie automatiquement par la programmation de la machine. Ces plots de verrouillage 6, 7 sont disposés de sorte que leurs axes 84, 85 (voir figure 2) soient dirigés vers le haut et que la rangée de taquets destinés à la réception de ce plot de verrouillage 7 comporte, pour chaque position du plot de verrouillage 7, une réservation. Puis, par des moyens de préhension 86, l'ensemble 64 est disposé sur les plots de verrouillage 6, 7, de sorte que leurs axes 84, 85 viennent s'engager dans les orifices 87, 88 (voir figure 1) de la tringle de manoeuvre 3.

Après contrôle 89 de la présence de ces plots de verrouillage 6, 7, on procède par une riveteuse 90 au rivetage du premier plot de verrouillage 6 et par une seconde riveteuse 91 au rivetage du second plot de verrouillage 7, étant entendu que la position de cette seconde riveteuse 91 par rapport au plan médian 47 de la machine 1 est fonction de la position du second plot de verrouillage 7.

Lorsque l'élément de ferrure 2 comporte un galet de verrouillage 11, le troisième transporteur 76 est pourvu d'un magasin d'alimentation 92 du galet de verrouillage 11. Par un manipulateur 93, le galet de verrouillage 11 est placé en position d'attente dans un logement réalisé dans le taquet, de sorte que son axe 94 (voir figure 2) soit dirigé vers le haut. Par des moyens de préhension 95, l'ensemble 64 est placé sur le galet de verrouillage 11, de sorte que ledit axe 94 traverse la lumière 12 réalisée dans la têtière 4 et vienne se loger dans un orifice 96 (voir figure 1) pratiqué dans la tringle de manoeuvre 3. Puis, par une riveteuse 97, on procède à la fixation du galet de verrouillage 11.

A la sortie 77 du troisième transporteur 76, l'ensemble 64 est pris en charge par des moyens de transbordement 98 comportant un bras de chargement oscillant pour disposer ledit ensemble 64, après un nouveau retournement à l'entrée 99 d'un quatrième transporteur 100. Suite à ce retournement, la face externe 10 de la têtière 4 est dirigée vers le haut. Le quatrième transporteur 100, constitué par un transporteur à chaîne, comporte un magasin d'alimentation 101 d'entretoises 28. Par un manipulateur 102, l'entretoise 28 est engagée par force dans un orifice 103 (voir figure 3) réalisé dans la têtière 4 pour aboutir dans un orifice 104 (voir figure 1) réalisé dans la tringle de manoeuvre 3. Après passage à travers un dispositif de contrôle final 105, l'élément de ferrure 2 entièrement assemblé est pris en charge à la sortie 106 du quatrième transporteur 100 pour être placé, par des moyens de transbordement 107 pourvus d'un bras de chargement oscillant, sur un transporteur de dégagement 108 après un nouveau retournement pour que la face interne 71 de la tringle de manoeuvre 3 soit dirigée vers le haut.

Le cas échéant, le transporteur de dégagement 108 comporte une riveteuse 109 pour le rivetage de l'entretoise 28.

## Revendications

1. Machine d'assemblage des différentes pièces d'un élément de ferrure (2) tel qu'un ensemble formé d'une tringle de manoeuvre (3) et d'une têtière (4) et coopérant, par l'intermédiaire d'un bras auxiliaire (19), avec un bras de compas solidaire du cadre dormant d'une fenêtre oscillo-battante, cette machine comprenant, pour chaque pièce à assembler (6, 7, 11, 18, 19, 23, 28, 29, 34), un magasin d'alimentation (53, 54, 56, 58, 63, 78, 79, 92, 101), un manipulateur (80, 81, 93, 102), des moyens de préhension (55, 59, 60, 65, 86, 95) et une succession de transporteurs (50, 70, 76, 100) avançant pas-à-pas et présentant le plan longitudinal de cet ensemble perpendiculairement au sens d'avance (45), caractérisée en ce qu'elle comporte en combinaison :
— des moyens (44, 50A) d'acheminement séparé de la têtière (4) et de la tringle de manoeuvre (3) disposés alternativement par des moyens de transbordement (49) sur un des transporteurs (50) avançant pas-à-pas,
— des moyens (50B, 74, 76, 100) d'acheminement superposé de la têtière (4) et de la tringle de manoeuvre (3),
— des moyens de mise en position d'attente et/ou de mise en position active de la têtière (4) et de la tringle de manoeuvre (3) en position séparée ou en position superposée ainsi que les différentes pièces à assembler (6, 7, 11, 18, 19, 23, 28, 29, 34) prélevées par des moyens de préhension dans les magasins de stockage (53, 54, 56, 58, 63, 78, 79, 92, 101) et amenés au droit de ces moyens,
— des moyens de transbordement (49, 68, 98, 107) assurant le retournement et le transfert entre un transporteur et un autre pour présenter vers le haut soit la face externe (10) de la têtière (4), soit la face interne (71) de la tringle de manoeuvre (3) assemblée à la têtière (4), en vue de la fixation par rivetage des différentes pièces à assembler maintenant le plan repère (46) de l'élément de ferrure (2) à une distance constante du plan médian (47) de la machine (1).

2. Machine d'assemblage selon la revendication 1, caractérisée en ce que les moyens d'acheminement séparé de la têtière (4) et de la tringle de manoeuvre (3) sont, d'une part, un magasin de stockage (44) composé de deux transporteurs superposés ayant une course pas-à-pas et dont l'un est destiné à l'acheminement des tringles de manoeuvre (3) et l'autre à l'acheminement des têtières (4), la face interne (16) de cette dernière étant dirigée vers le haut et, d'autre part, un premier tronçon "A" du premier transporteur (50) sur lequel la tringle de manoeuvre (3) est en aval par rapport à la têtière (4) jusqu'à hauteur des moyens de préhension (59, 60) déposant la tringle de manoeuvre (3) sur le coffre anti-fausse manoeuvre (29) et la têtière (4) sur la tringle de manoeuvre (3).

3. Machine d'assemblage selon la revendication 1, caractérisée en ce que les moyens de transbordement (49) comportent un bras de chargement oscillant prélevant la têtière (4) du transporteur inférieur du magasin (44) pour la disposer, après retournement, sur le premier transporteur (50) et un élément de transfert assurant la dépose de la tringle de manoeuvre (3) en aval de la têtière (4) à l'entrée (51) dudit premier transporteur (50).

4. Machine d'assemblage selon la revendication 1, caractérisée en ce que les moyens d'acheminement superposé de la têtière (4) et de la tringle de manoeuvre (3) sont le tronçon "B" du premier transporteur (50), d'un second transporteur (70), d'un troisième transporteur (76) et d'un quatrième transporteur (100), chaque transporteur étant un transporteur à chaîne comportant au moins deux chaînes parallèles entraînées par des pignons dentés et pourvues de rangées de taquets.

5. Machine d'assemblage selon les revendications 1 et 4, caractérisée en ce que les moyens de mise en position d'attente et/ou de mise en position active de la têtière (4) et de la tringle de manoeuvre (3) sont des logements parallèles transversaux réalisés dans les taquets et dans lesquels on dispose par des moyens de préhension ou desquels on retire, par d'autres moyens de préhension, respectivement, la tringle de manoeuvre (3) et la têtière (4).

6. Machine d'assemblage selon les revendications 1 et 4, caractérisée en ce que les moyens de mise en position d'attente et/ou de mise en position active des différentes pièces à assembler sont des évidements pratiqués dans les taquets pour y loger, au-fur-et-à-mesure de l'avance, l'axe d'articulation (18), le coffre anti-fausse manoeuvre (29), le guide-vis (34), les plots de verrouillage (6, 7) et le galet de verrouillage (11).

7. Machine d'assemblage selon la revendication 6, caractérisée en ce que les taquets situés sur une rangée comportent deux réservations pour la mise en place du guide-vis (34) et que les taquets situés sur une autre rangée comportent pour chaque position variable d'un des plots de verrouillage (7) une réservation pour la mise en place de ce dernier.

8. Machine d'assemblage selon la revendication 1, caractérisée en ce que les moyens de transbordement présentant vers le haut la face externe (10) de la têtière (4) sont un moyen de transbordement (49) comportant un bras de chargement oscillant situé entre le magasin (44) et le premier transporteur (50) et un moyen de transbordement (98) comportant un bras de chargement oscillant situé entre le troisième transporteur (76) et le quatrième transporteur (100).

9. Machine d'assemblage selon la revendication 1, caractérisée en ce que les moyens de transbordement présentant vers le haut la face interne (71) de la tringle de manoeuvre (3) assemblée à la têtière (4) sont un moyen de transbordement (68) comportant un bras de chargement oscillant situé entre le premier transporteur (50) et le second transporteur (70) et un moyen de transbordement (107) comportant un bras de chargement oscillant situé entre le quatrième transporteur (100) et un transporteur de dégagement (108).

10. Machine d'assemblage selon la revendication 1, caractérisée en ce qu'elle comporte une première série de riveteuses (57, 62, 66) situées au-dessus de la face externe (10) de la têtière (4) et destinées au rivetage de l'axe d'articulation (18), du coffre anti-fausse manoeuvre (29) et du guide-vis (34) et une seconde série de riveteuses (90, 91, 97 et 109) situées au-dessus de la face interne (71) de la tringle de manoeuvre (3) et destinées au rivetage des plots de verrouillage (6, 7), du galet de verrouillage (11) et de l'entretoise (28).

**Patentansprüche**

1. Maschine zum Zusammenbauen der verschiedenen Teile eines Beschlagelementes (2), wie einer Einheit, die aus einem Stangenriegel (3) und einer Stulpschiene (4) gebildet ist und über einen Hilfsarm (19) mit einem Scherenarm zusammenwirkt, der mit dem Stockrahmen eines Schwingflügelfensters verbunden ist, wobei diese Maschine für jeden der zusammenzubauenden Teile (6, 7, 11, 18, 19, 23, 28, 29, 34) ein Vorratsmagazin (53, 54, 56, 58, 63, 78, 79, 92, 101), einen Manipulator (80, 81, 93, 102), Greifmittel (55, 59, 60, 65, 86, 95) und eine Folge von Förderern (50, 70, 76, 100) aufweist, die Schrittvorschub haben und die Längsebene dieser Einheit senkrecht zur Vorschubrichtung (45) präsentieren, dadurch gekennzeichnet, daß sie in Kombination aufweist :
— Mittel (44, 50A) zum getrennten Transport der Stulpschiene (4) und des Stangenriegels (3), die abwechselnd durch Umlademittel (49) auf einem der Förderer (50) mit Schrittvorschub angeordnet werden,
— Mittel (50B, 74, 76, 100) zum überlagernden Transport der Stulpschiene (4) und des Stangenriegels (3),
— Mittel, um die Stulpschiene (4) und den Stangenriegel (3) in getrennter Position oder in überlagernder Position sowie die verschiedenen zusammenzubauenden Teile (6, 7, 11, 18, 19, 23, 28, 29, 34), die durch die Greifmittel aus dem Vorratsmagazin (53, 54, 56, 58, 63, 78, 79, 92, 101) angehoben und vor diese Mittel gebracht werden, in eine Warteposition und/oder eine aktive Position zu bringen,
— Mittel (49, 68, 98, 107), welche ein Umdrehen und ein Umladen zwischen einem Förderer und einem anderen sicherstellen, um entweder die Außenseite (10) der Stulpschiene (4) oder die Innenseite (71) der mit der Stulpschiene (4) zusammengebauten Treibstange (3) nach oben zu kehren, um die verschiedenen zusammenzubauenden Teile durch Nieten zu fixieren, wobei die Bezugsebene (46) des Beschlagelementes (2) in einem konstanten Abstand von der Mittelebene (47) der Maschine (1) gehalten wird.

2. Zusammenbaumaschine nach Anspruch 1, dadurch gekennzeichnet, daß die Mittel für den gesonderten Transport der Stulpschiene (4) und der Treibstange (3) einerseits ein Vorratsmagazin (44) aufweisen, das aus zwei einander überlagernden Förderern gebildet ist, von denen jeder mit Schrittvorschub arbeitet und von denen der eine dazu bestimmt ist, die Treibstange (3) zu transportieren, und der andere, die Stulpschienen (4) zu transportieren, wobei die Innenseite (16) der letzteren nach oben gerichtet ist, und anderseits einen ersten Abschnitt "A" des ersten Förderers (50) aufweisen, auf welchem die Treibstange (3) bezüglich der Stulpschiene (4) bis zur Höhe der Greifmittel (59, 60) stromabwärts angeordnet ist, welche die Treibstange (3) auf einen aufbrechsicheren Kasten (29) und die Stulpschiene (4) auf die Treibstange (3) legen.

3. Zusammenbaumaschine nach Anspruch 1, dadurch gekennzeichnet, daß die Umlademittel (49) einen hin- und herbeweglichen Ladearm aufweisen, welcher die Stulpschiene (4) vom unteren Förderer des Magazins (44) anhebt, um sie nach einem Umdrehen auf dem ersten Förderer (50) anzuordnen, und ein Überstellelement, welches das Ablegen der Treibstange (3) stromabwärts der Stulpschiene (4) am Eingang (51) des ersten Förderers (50) sicherstellt.

4. Zusammenbaumaschine nach Anspruch 1, dadurch gekennzeichnet, daß die einander überlagernden Transportmittel der Stulpschiene (4) und der Treibstange (3) der beschnitt "B" des ersten Förderers (50), eines zweiten Förderers (70) und eines dritten Förderers (76) sowie eines vierten Förderers (100) sind, wobei jeder Förderer ein Kettenförderer ist, der zumindest zwei parallele Ketten aufweist, die durch Kettenrad angetrieben und mit Reihen von Mitnehmern versehen sind.

5. Zusammenbaumaschine nach den Ansprüchen 1 und 4, dadurch gekennzeichnet, daß die Mittel zum Positionieren der Stulpschiene (4) und der Treibstange (3) in der Wartestellung und/oder in der aktiven Stellung parallele Queraufnahmen sind, die in den Mitnehmern ausgebildet sind und in denen man mittels der Greifmittel oder aus denen man mittels anderer Greifmittel die Treibstange (3) und die Stulpschiene (4) anordnet bzw. herauszieht.

6. Zusammenbaumaschine nach den Ansprüchen 1 und 4, dadurch gekennzeichnet, daß die Mittel zum Positionieren der verschiedenen zusammenzubauenden Teile in der Wartestellung und/oder in der aktiven Stellung Ausnehmungen sind, die in den Mitnehmern ausgebildet sind, um in diesen je nach dem Vorschub die Schwenkachse (18), den aufbrechsicheren Kasten (29), die Führungsschraube (34), die Verriegelungsklötze (6, 7) und die Verriegelungsrolle (11) anzuordnen.

7. Zusammenbaumaschine nach Anspruch 6, dadurch gekennzeichnet, daß die in einer Reihe angeordneten Mitnehmer zwei Aufnahmen zum Anbringen einer Führungsschraube (34) aufweisen, und daß die in einer anderen Reihe angeordneten Mitnehmer für jede variable Position eines der Verriegelungsklötze (7) eine Aufnahme zum Anbringen der letzteren aufweisen.

8. Zusammenbaumaschine nach Anspruch 1, dadurch gekennzeichnet, daß die Umlademittel, welche die Außenseite (10) der Stulpschiene (4) nach oben kehren, ein Umlademittel (49) mit einem zwischen dem Magazin (44) und dem ersten Förderer (50) hin- und herbeweglichen Ladearm und ein Umlademittel (98) mit einen zwischen dem dritten Förderer (76) und dem vierten Förderer (100) hin- und herbeweglichen Ladearm sind.

9. Zusammenbaumaschine nach Anspruch 1, dadurch gekennzeichnet, daß die Umlademittel, welche die Innenseite (71) der mit der Stulpschiene (4) zusammengebauten Treibstange (3) nach oben kehren, ein Umlademittel (68) mit einem zwischen dem ersten Förderer (50) und dem zweiten Förderer (70) hin- und herbeweglichen Ladearm und ein Umlademittel (107) mit einem zwischen dem vierten Förderer (100) und dem Austragförderer (180) hin- und herbeweglichen Ladearm sind.

10. Zusammenbaumaschine nach Anspruch 1, dadurch gekennzeichnet, daß sie eine erste Reihe von Nietvorrichtungen (57, 62, 66) aufweist, die oberhalb der Außenseite (10) der Stulpschiene (4) angeordnet und dazu bestimmt sind, die Schwenkachse (18), den aufbrechsicheren Kasten (29) und die Führungsschraube (34) zu vernieten, und eine zweite Reihe von Nietvorrichtungen (90, 91, 97, 109), die oberhalb der Innenseite (71) der Treibstange (3) angeordnet und dazu bestimmt sind, die Verriegelungsklötze (6, 7), die Verriegelungsrolle (11) und ein Zwischenstück (28) zu vernieten.

## Claims

1. Machine for assembling the various parts of a small ironwork element (2), such as a unit comprised of an operating rod (3) and a face-plate (4) and cooperating, through an auxiliary arm (19), with a folding arm integral with the sash-frame of an oscillating-swinging window, this machine comprising, for each part to be assembled (6, 7, 11, 18, 19, 23, 28, 29, 34), a supply magazine (53, 54, 56, 58, 63, 78, 79, 92, 101), a manipulator (80, 81, 93, 102), gripping means (55, 59, 60, 65, 86, 95) and a series of step-by-step conveyers (50, 70, 76, 100) bringing the longitudinal plane of this unit perpendicularly to the direction of the feed motion (45), characterized in that it comprises in combination :

— means (44, 50A) for separately conveying the face-plate (4) and the operating rod (3), alternatively arranged, by transfer means (49) onto one of the step-by-step conveyers (50),

— means (50B, 74, 76, 100) for the superposed conveying of the face-plate (4) and the operating rod (3),

— means for the placing in waiting position and/or the placing in active position of the face-plate (4) and the operating rod (3) in separate positions or in superposed positions as well as of the various parts to be assembled (6, 7, 11, 18, 19, 23, 28, 29, 34) and taken by gripping means off the supply magazines (53, 54, 56, 58, 63, 78, 79, 92, 101) and brought in front of these means,

— transfer means (49, 68, 98, 107) ensuring the return and transfer between one conveyer and another one to present upwards either the outer face (10) of the face-plate (4) or the inner face (71) of the operating rod (3) assembled to the face-plate (4) with a view to the securing by riveting of the various parts to be assembled while keeping the reference plane (46) of the small ironwork element (2) at a constant distance from the median plane (47) of the machine (1).

2. Assembling machine according to claim 1, characterized in that the means for separately conveying the face-plate (4) and the operating rod (3) are, on the one hand, a storage magazine (44) comprised of two superposed conveyers having a step-by-step travel and one of which is intended for conveying the operating rods (3) and the other one for conveying the face-plates (4), the inner face (16) of this latter being oriented upwards and, on the other hand, a first segment "A" of the first conveyer (50) on which the operating rod (3) is downstream with respect to the face-plate (4) up to the height of the gripping means (59, 60) laying down the operating rod (3) onto the anti-false-manoeuvre box (29) and the face-plate (4) onto the operating rod (3).

3. Assembling machine according to claim 1, characterized in that the transfer means (49) comprise a swinging loading-arm taking the face-plate (4) off the lower conveyer of the magazine (44) to arrange same, after return, onto the first conveyer (50) and a transfer member ensuring the laying-down of the operating rod (3) down-stream the face-plate (4) at the inlet (51) of said first conveyer (50).

4. Assembling machine according to claim 1, characterized in that the means for the superposed conveying of the face-plate (4) and the operating rod (3) are the segment "B" of the first conveyer (50), of a second conveyer (70), of a third conveyer (76) and of a fourth conveyer (100), each conveyer being a chain conveyer comprising at least two parallel chains driven by gear wheels and provided with rows of cams.

5. Assembling machine according to claims 1 and 4, characterized in that the means for the placing in waiting position and/or the placing in active position of the face-plate (4) and the operating rod (3) are transversal parallel recesses provided for in the cams and into which are arranged, by gripping means, or from which are removed, by other gripping means, respectively, the operating rod (3) and the face-plate (4).

6. Assembling machine according to claims 1 and 4, characterized in that the means for the placing in waiting position and/or the placing in active position of the various parts to be assembled are recesses provided for in the cams for accomodating into same, as they are fed, the hinge-pin (18), the anti-false-manoeuvre box (29), the screw guide (34), the locking pins (6, 7) and the locking roller (11).

7. Assembling machine according to claim 6, characterized in that the cams located in a row comprise two recesses for the placing of the screw guide (34) and the cams located in another row comprise, for each varying position of one of the locking pins (7), a recess for the placing of this latter.

8. Assembling machine according to claim 1, characterized in that the transfer means presenting upwards the outer face (10) of the face-plate (4) are a transfer means (49) comprising a swinging loading-arm located between the magazine (44) and the first conveyer (50) and a transfer means (98) comprising a swinging loading-arm located between the third conveyer (76) and the fourth conveyer (100).

9. Assembling machine according to claim 1, characterized in that the transfer means presenting upwards the inner face (71) of the operating rod (3) assembled to the face-plate (4) are a transfer means (68) comprising a swinging loading-arm located between the first conveyer (50) and the second conveyer (70) and a transfer means (107) comprising a swinging loading-arm located between the fourth conveyer (100) and a feed-out conveyer (108).

10. Assembling machine according to claim 1, characterized in that it comprises a first series of riveters (57, 62, 66) located above the outer face (10) of the face-plate (4) and intended for riveting the hinge-pin (18), the anti-false-manoeuvre box (29) and the screw guide (34) and a second series of riveters (90, 91, 97 and 109) located above the inner face (71) of the operating rod (3) and intended for riveting the locking pins (6, 7), the locking roller (11) and the spacer (28).

FIG.1    FIG.2    FIG.3

FIG.4